# EUROPEAN PATENT APPLICATION

(11) **EP 4 488 801 A1**
(43) Date of publication of application: **08.01.2025**
(21) Application number: 23759672.1
(22) Date of filing: 07.02.2023
(51) Int. Cl.: G06F 3/01, A63F 13/211, A63F 13/65, G06T 19/00

(54) **INFORMATION PROCESSING DEVICE AND FLOOR HEIGHT ADJUSTMENT METHOD**

(30) Priority: 28.02.2022 JP 2022029965
(71) Applicant: Sony Interactive Entertainment Inc., Tokyo 108-0075 (JP)
(72) Inventor: NOMURA Masanori, Tokyo 108-0075 (JP); MULASE Yurika, Tokyo 108-0075 (JP); YONETOMI Shoi, Tokyo 108-0075 (JP)
(74) Representative: D Young & Co LLP
(86) International application number: PCT/JP2023/003922
(87) International publication number: WO 2023/162668

(57) **Abstract**

An image generation device generates an adjustment screen 300 for allowing a user wearing a head-mounted display to adjust a floor height in a virtual space displayed on the head-mounted display. The adjustment screen 300 includes a stadiometer image 302. The image generation device causes the head-mounted display to display the adjustment screen 300. When an operation for setting a height of the user to the stadiometer image 302 in the adjustment screen 300 has been input, the image generation device sets the floor height in the virtual space according to the height of the user set to the stadiometer image 302.

## Description

### [Technical Field]

The present invention relates to a data processing technology, and particularly relates to an information processing device and a floor height adjustment method.

### [Background Art]

An image display system with which a user wearing a head-mounted display can appreciate a target space from a freely selected viewpoint has been widespread. For example, there is known electronic content that realizes virtual reality (VR) by setting a virtual three-dimensional (3D) space as a display target and causing the head-mounted display to display an image corresponding to a visual line direction of the user. With use of a head-mounted display, it is also possible to enhance a sense of immersion into a video or improve operability for an application such as a game. There is also developed a walk-through system with which a user wearing a head-mounted display can virtually walk around in a space displayed as a video, by physically moving.

### [Summary]

### [Technical Problem]

In an image display system that presents a user wearing a head-mounted display with a VR image, various objects such as items in a game are disposed on a floor in a preset virtual space in some cases. In a case where a deviation of a floor height in the virtual space set in the image display system from a floor height in a real space is significant, the user may feel discomfort to the VR image, which may lead to impairing of the sense of immersion into the VR.

The present invention has been made in view of the problem described above, and an object thereof is to provide a technology for assisting setting of a floor height in a virtual space.

### [Solution to Problem]

In order to solve the problem described above, according to an aspect of the present invention, there is provided an information processing device including an adjustment screen generation unit that generates an adjustment screen for allowing a user wearing a head-mounted display to adjust a floor height in a virtual space displayed on the head-mounted display, the adjustment screen including an image of a stadiometer, a display control unit that causes the head-mounted display to display the adjustment screen, and a floor setting unit that, when an operation for setting a height of the user to the image of the stadiometer in the adjustment screen has been input, sets the floor height in the virtual space according to the height of the user set to the image of the stadiometer.

According to another aspect of the present invention, there is provided a floor height adjustment method. This method including a step of generating an adjustment screen for allowing a user wearing a head-mounted display to adjust a floor height in a virtual space displayed on the head-mounted display, the adjustment screen including an image of a stadiometer, a step of causing the head-mounted display to display the adjustment screen, and a step of, when an operation for setting a height of the user to the image of the stadiometer in the adjustment screen has been input, setting the floor height in the virtual space according to the height of the user set to the image of the stadiometer is executed by a computer.

It is to be noted that any combinations of the constituent elements described above and those obtained by converting expressions of the present invention between a system, a computer program, a recording medium having recorded therein a computer program in a readable manner, a data structure, and the like are also effective as aspects of the present invention.

### [Advantageous Effect of Invention]

According to the present invention, it is possible to assist setting of a floor height in a virtual space.

### [Brief Description of Drawings]

[FIG. 1]

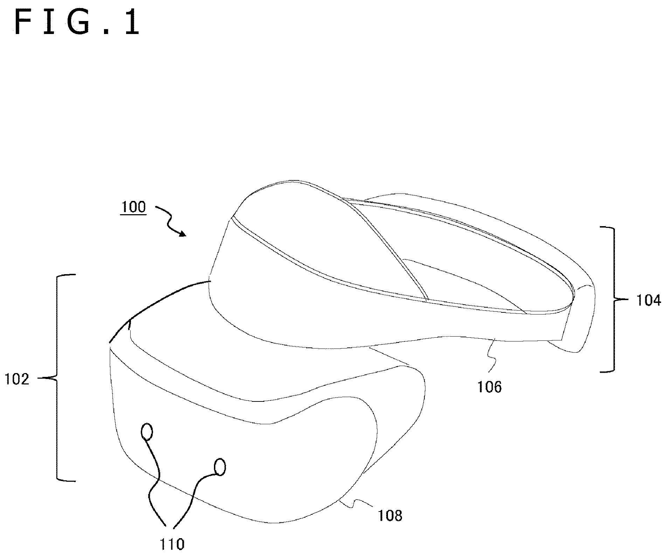

   FIG. 1 is a view illustrating an appearance example of a head-mounted display according to an embodiment.
[FIG. 2]

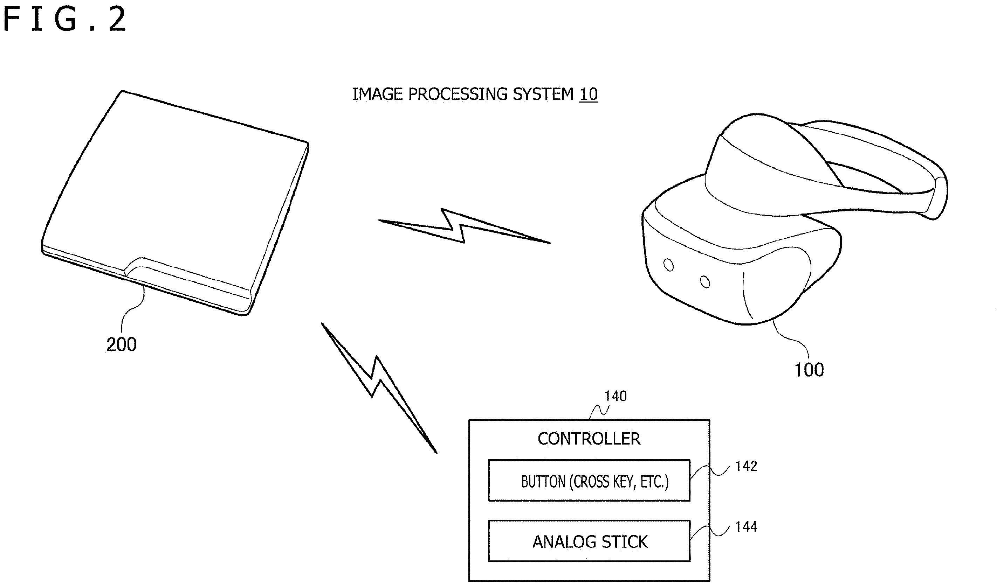

   FIG. 2 is a view illustrating a configuration example of an image display system according to the embodiment.
[FIG. 3]

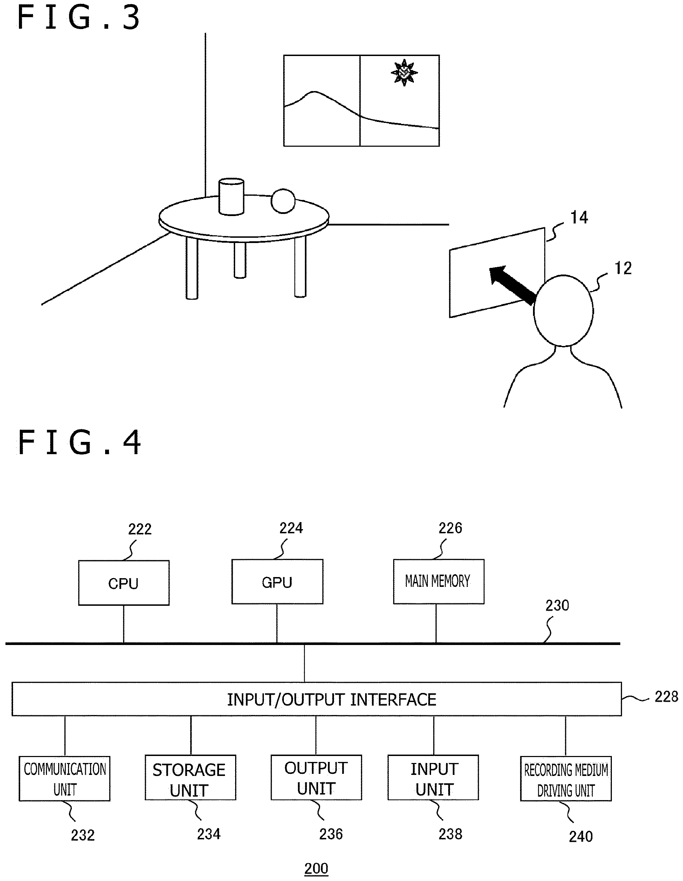

   FIG. 3 is a view for explaining an example of an image world that an image generation device causes the head-mounted display to display.
[FIG. 4]
   FIG. 4 is a view illustrating an internal circuit configuration of the image generation device.
[FIG. 5]

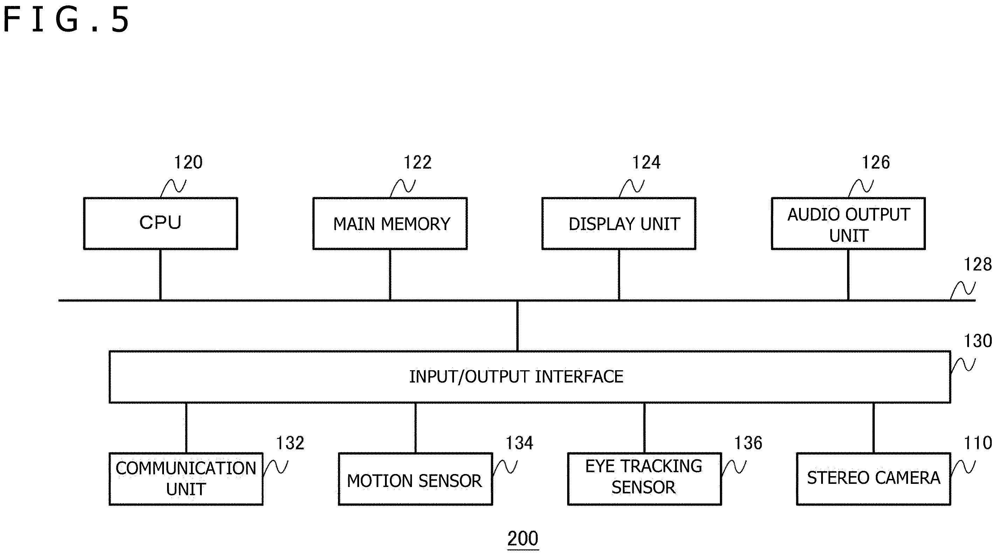

   FIG. 5 is a view illustrating an internal circuit configuration of the head-mounted display.
[FIG. 6]

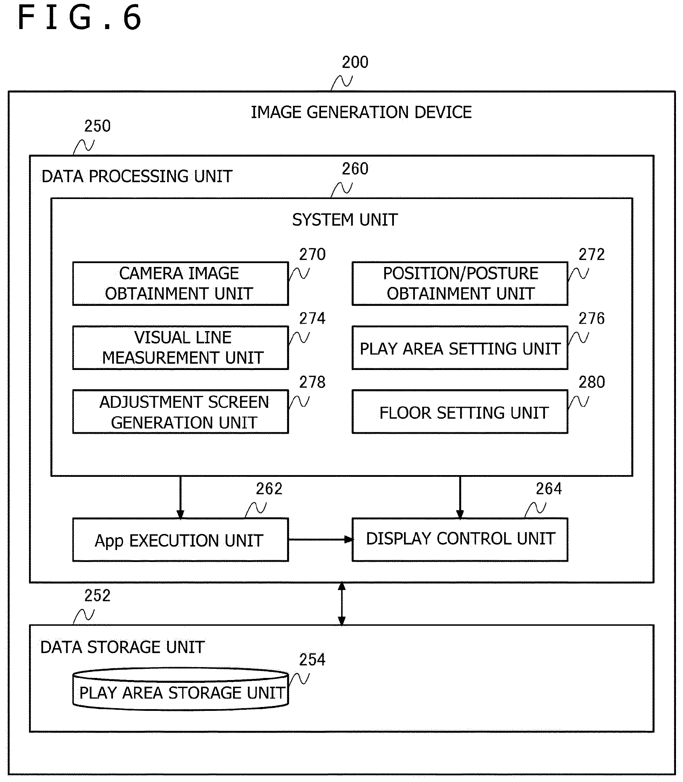

   FIG. 6 is a block diagram illustrating functional blocks of the image generation device.
[FIG. 7]

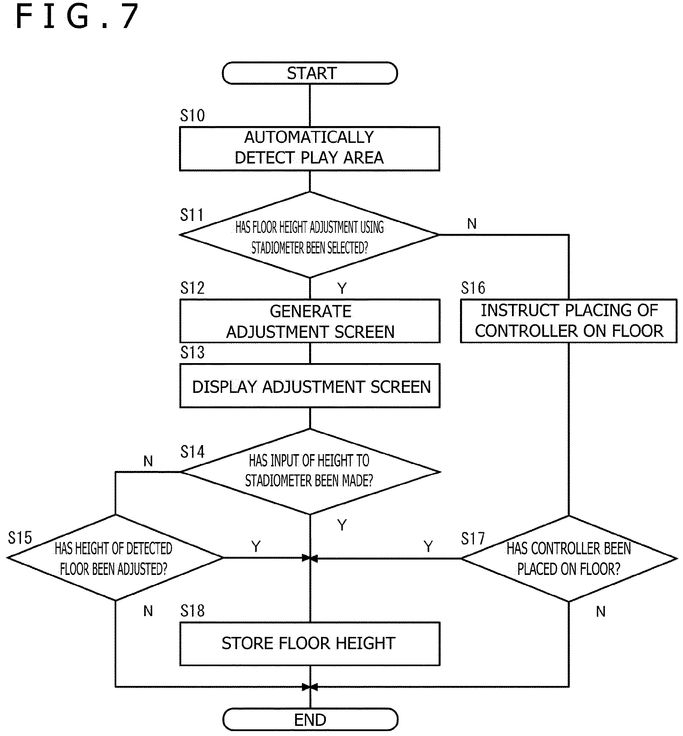

   FIG. 7 is a flowchart illustrating an operation of the image generation device.
[FIG. 8]

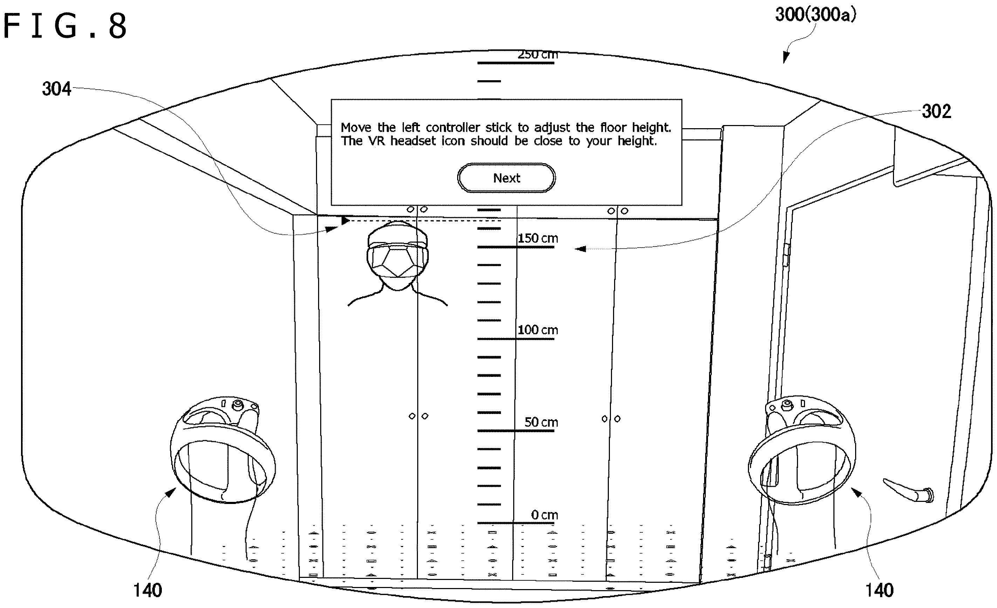

   FIG. 8 is a view illustrating an example of an adjustment screen.
[FIG. 9]

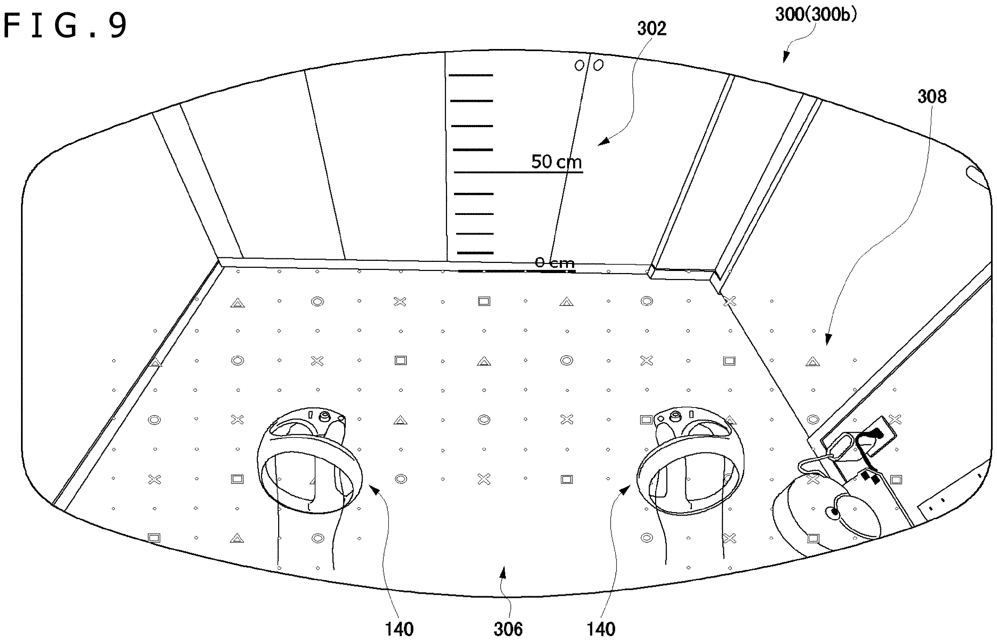

   FIG. 9 is a view illustrating another example of the adjustment screen.

### [Description of Embodiment]

The present embodiment relates to an image display system that displays an application image on a head-mounted display worn on the head of a user. The head-mounted display is also referred to as a VR headset. FIG. 1 illustrates an appearance example of a head-mounted display 100 according to the embodiment. The head-mounted display 100 includes an output mechanism part 102 and a mounting mechanism part 104. The mounting mechanism part 104 includes a mounting band 106 that realizes securing of the device around the head by being worn by the user.

The output mechanism part 102 includes a housing 108 having such a shape that the left and right eyes of the user wearing the head-mounted display 100 are covered, and is internally provided with a display panel that faces the eyes of the user when the user wears the head-mounted display 100. The display panel of the head-mounted display 100 of the embodiment is assumed not to have transparency. In other words, the head-mounted display 100 of the embodiment is a light-opaque type head-mounted display.

The housing 108 may further be internally provided with eyepieces that are positioned between the eyes of the user wearing the head-mounted display 100 and the display panel of the head-mounted display 100 and that enlarge a viewing angle of the user. The head-mounted display 100 may further include speakers and earphones at positions corresponding to the ears of the user when worn by the user. In addition, the head-mounted display 100 incorporates a motion sensor and detects a translational motion and a rotational motion of the head of the user wearing the head-mounted display 100 as well as a position or a posture thereof at each time point.

In addition, the head-mounted display 100 includes a stereo camera 110 provided at a front surface of the housing 108. The stereo camera 110 captures a video of a surrounding real space with a visual field corresponding to a visual line of the user. When a captured image is immediately caused to be displayed, it is possible to realize what is generally called video see-through in which a situation of the real space in a direction that the user is facing can be seen unchanged. Moreover, it is possible to realize augmented reality (AR) if a virtual object is drawn on a silhouette image of a real object appearing in the captured image. It is to be noted that the number of cameras that the image display system 10 includes is not limited to any specific number, and the head-mounted display 100 may include one camera or may include three or more cameras.

FIG. 2 illustrates a configuration example of the image display system 10 according to the embodiment. The image display system 10 includes the head-mounted display 100, an image generation device 200, and a controller 140. The head-mounted display 100 is connected to the image generation device 200 by wireless communication. The image generation device 200 may also be connected to a server (not illustrated) via a network. In this case, the server may provide the image generation device 200 with data regarding an online application such as a game that a plurality of users can participate in via a network.

The image generation device 200 is an information processing device that, on the basis of the position or the posture of the head of the user wearing the head-mounted display 100, specifies a position of a viewpoint and a direction of the visual line, generates such a display image that a visual field corresponding to the specified position and direction is realized, and outputs the generated display image to the head-mounted display 100. The image generation device 200 may be a stationary game machine, a PC, or a tablet terminal. While the image generation device 200 can execute various applications relating to VR or AR, it is assumed that the image generation device 200 in the embodiment causes an electronic game (hereinafter, also referred to as a "VR game") depicting a virtual world to progress and, at the same time, generates a display image of the virtual world that is a stage in the game, and then causes the head-mounted display 100 to display the generated display image.

It is to be noted that the image generation device 200 may generate a moving image for the purpose of appreciation or information provision, irrespective of whether for the virtual world or the real world, and cause the head-mounted display 100 to display the generated moving image. In addition, the image generation device 200 may cause the head-mounted display 100 to display a panoramic image having a wide angle of view centered on the viewpoint of the user, so that it is possible to provide the user with a deep sense of immersion into the display world.

The controller 140 is an input device (for example, a game controller) which is grasped by a hand of the user and which is inputted with an operation by the user. An operation by the user includes an operation for controlling image generation in the image generation device 200 and an operation for controlling image display on the head-mounted display 100. The controller 140 is connected to the image generation device 200 by wireless communication and transmits data indicating the operation made by the user to the image generation device 200. As a modified example, one of or both the head-mounted display 100 and the controller 140 may be connected to the image generation device 200 by wired communication via a signal cable or the like.

The controller 140 includes a button 142 and an analog stick 144 as members for receiving operations input by the user. The button 142 includes direction buttons or a cross key. The analog stick 144 is also called a control stick and is used, by being tilted, to input a direction and a tilting amount. The tilting amount can also be considered as an angle by which the analog stick 144 is tilted.

FIG. 3 is a view for explaining an example of an image world that the image generation device 200 causes the head-mounted display 100 to display. In this example, a state in which a user 12 is in a room that is a virtual space has been created. As illustrated, objects such as walls, a floor, a window, a table, and objects on the table are disposed in a world coordinate system that defines the virtual space. In the world coordinate system, the image generation device 200 defines a view screen 14 according to the position of the viewpoint and the direction of the visual line of the user 12 and depicts silhouette images of the objects in the view screen 14 to draw a display image.

The image generation device 200 obtains the position of the viewpoint and the direction of the visual line (hereinafter, these may inclusively be referred to as the "viewpoint") of the user 12 from the head-mounted display 100 at a predetermined rate and causes a position or a direction of the view screen 14 to change according to the viewpoint. As a result, it is possible to cause the head-mounted display 100 to display an image with a visual field corresponding to the viewpoint of the user. In addition, it is possible to allow the user 12 to stereoscopically view the virtual space if the image generation device 200 generates stereo images having a parallax and causes left and right regions of the display panel of the head-mounted display 100 to display the stereo images. As a result, the user 12 can experience a virtual reality as if the user 12 were in the room in the display world.

FIG. 4 illustrates an internal circuit configuration of the image generation device 200. The image generation device 200 includes a central processing unit (CPU) 222, a graphics processing unit (GPU) 224, and a main memory 226. These units are connected to each other via a bus 230. An input/output interface 228 is also connected to the bus 230. A communication unit 232, a storage unit 234, an output unit 236, an input unit 238, and a recording medium driving unit 240 are connected to the input/output interface 228.

The communication unit 232 includes a peripheral device interface such as a USB and IEEE1394, and a network interface such as a wired LAN or a wireless LAN. The storage unit 234 includes a hard disk drive, a nonvolatile memory, or the like. The output unit 236 outputs data to the head-mounted display 100. The input unit 238 receives an input of data from the head-mounted display 100 and also receives an input of data from the controller 140. The recording medium driving unit 240 drives a removable recording medium such as a magnetic disc, an optical disc, or a semiconductor memory.

The CPU 222 executes an operating system stored in the storage unit 234 to thereby control the entire image generation device 200. In addition, the CPU 222 executes various programs (for example, a VR game application or the like) that have been read out from the storage unit 234 or the removable recording medium and loaded into the main memory 226 or that have been downloaded via the communication unit 232. The GPU 224 has a function as a geometry engine and a function as a rendering processor such that it performs a drawing process according to a drawing command from the CPU 222 and outputs a result of the drawing process to the output unit 236. One of or both the CPU 222 and the GPU 224 can also be referred to as a processor. The main memory 226 includes a random access memory (RAM) and stores programs and data necessary for processing.

FIG. 5 illustrates an internal circuit configuration of the head-mounted display 100. The head-mounted display 100 includes a CPU 120, a main memory 122, a display unit 124, and an audio output unit 126. These units are connected to each other via a bus 128. An input/output interface 130 is also connected to the bus 128. A communication unit 132 including an interface for wireless communication, a motion sensor 134, an eye tracking sensor 136, and the stereo camera 110 are connected to the input/output interface 130.

The CPU 120 processes information obtained from each unit in the head-mounted display 100 via the bus 128, and also supplies the display unit 124 and the audio output unit 126 with the display image obtained from the image generation device 200 and audio data. The main memory 122 stores programs and data necessary for processing by the CPU 120.

The display unit 124 includes a display panel such as a liquid crystal panel or an organic EL panel and displays an image in front of the eyes of the user wearing the head-mounted display 100. The display unit 124 displays a pair of stereo images on a left eye display panel provided in front of the left eye of the user and on a right eye display panel provided in front of the right eye of the user, to thereby realize stereoscopic vision. The display unit 124 may further include a pair of lenses (a left eye lens and a right eye lens) that are positioned between the display panel and the eyes of the user wearing the head-mounted display 100 and that enlarge the viewing angle of the user.

The audio output unit 126 includes speakers and earphones that are provided at positions corresponding to the ears of the user wearing the head-mounted display 100, and allows the user to hear sound. The communication unit 132 is an interface for sending and receiving data to and from the image generation device 200 and uses a known wireless communication technology such as Bluetooth (registered trademark) to realize communication.

The motion sensor 134 includes a gyro sensor and an acceleration sensor and obtains an angular velocity and an acceleration of the head-mounted display 100. The eye tracking sensor 136 is a publicly known sensor for eye tracking. Eye tracking can also be said to be visual line measurement and is a technology for detecting a position and a motion of a pupil (or an eyeball) as well as the visual line direction of the user. For example, the eye tracking sensor 136 uses infrared rays or the like to detect the position and motion of the pupil of the user.

As illustrated in FIG. 1, the stereo camera 110 is a pair of video cameras for capturing, from left and right viewpoints, the surrounding real space with the visual field corresponding to the viewpoint of the user. An image that is captured by the stereo camera 110 and in which the space surrounding the user appears is also referred to below as a "camera image." A camera image can be said to be an image in which the real space in the visual line direction of the user (typically, in front of the user) appears, and can also be said to be an image in which an object which is present in the visual line direction of the user appears.

Data transmitted from the head-mounted display 100 to the image generation device 200 via the communication unit 132 includes the following contents:
(1) measurement values obtained by the motion sensor 134;
(2) measurement values obtained by the eye tracking sensor 136; and
(3) data regarding an image (camera image) captured by the stereo camera 110.

Here, description is given regarding a problem in a conventional technology for setting a floor height in a virtual space and also regarding features of the image display system 10 according to the embodiment. As a conventional method for setting a floor height in a virtual space, there is known a method in which a controller is used to touch a floor in a real space. However, the present inventor has thought that this conventional method is not perfect from the perspective of accessibility, such as in a case where a person whose knees hurt when being bent has trouble using the conventional method.

To cope with this problem, the image display system 10 of the embodiment provides an adjustment screen that is a user interface (UI) for allowing the user wearing the head-mounted display 100 to adjust the floor height in the virtual space displayed on the head-mounted display 100. The adjustment screen includes an image of a stadiometer. When an operation for setting a height of the user to the image of the stadiometer in the adjustment screen is input, the floor height in the virtual space is set according to the set height of the user. This enables assistance for the user to appropriately set the floor height in the virtual space. In addition, this realizes a method high in accessibility for setting the floor height in the virtual space.

FIG. 6 is a block diagram illustrating functional blocks of the image generation device. The image generation device 200 executes various kinds of information processing such as progression in the VR game or communication with the server, but description is primarily given below for functional blocks relating to the setting of the floor height in the virtual space.

The plurality of functional blocks illustrated in FIG. 6 can be realized in terms of hardware by configurations such as the CPU 222, the GPU 224, the main memory 226, and the storage unit 234 that are illustrated in FIG. 4, and can be realized in terms of software by a computer program that implements the functions of the plurality of functional blocks. Accordingly, it is to be understood by those skilled in the art that these functional blocks can be realized in various forms by hardware only, software only, or a combination thereof, and the form of realizing these functional blocks is not limited to any of these.

The image generation device 200 includes a data processing unit 250 and a data storage unit 252. The data storage unit 252 corresponds to the storage unit 234 in FIG. 4 and stores data that is referred to or updated by the data processing unit 250. For example, the data storage unit 252 stores image data regarding each element disposed in the adjustment screen, which is described below with reference to FIG. 8 and the like.

Further, the data storage unit 252 includes a play area storage unit 254. The play area storage unit 254 stores data regarding a play area. The play area is an area within which the user wearing the head-mounted display 100 can move around during playing of the application (for example, a VR game). The play area can be said to be an area or a range which is included in the space surrounding the user (that is, a broad space around the user in the real world) and within which the user is permitted to move around while viewing a VR image (for example, a 3D image in the VR game).

The play area storage unit 254 may store, as the data regarding the play area, data indicative of a position of a point group constituting a boundary of the play area (for example, coordinate values of each point in the world coordinate system). The play area storage unit 254 in the embodiment further stores data indicative of the floor height in the virtual space where the VR game is executed. The floor height in the virtual space can also be said to be a distance in a vertical direction from a reference part of the head-mounted display 100 to the floor.

The data processing unit 250 executes various kinds of data processing. The data processing unit 250 transmits and receives data to and from the head-mounted display 100 and the controller 140 via the communication unit 232, the output unit 236, and the input unit 238 that are illustrated in FIG. 4. For example, the data processing unit 250 obtains a camera image or sensor data transmitted from the head-mounted display 100, and obtains data regarding an operation made by the user, the data being transmitted from the controller 140.

The data processing unit 250 includes a system unit 260, an App execution unit 262, and a display control unit 264. The functions of the plurality of functional blocks included in the data processing unit 250 may be implemented by a computer program. The processor of the image generation device 200 (for example, the CPU 222 and the GPU 224) reads out the above-described computer program which is stored in a storage (for example, the storage unit 234) of the image generation device 200 into the main memory 226 and executes the computer program, to thereby exhibit the functions of the plurality of functional blocks included in the data processing unit 250.

The App execution unit 262 reads out data regarding the application (a VR game in the embodiment) selected by the user from the data storage unit 252 and executes the application selected by the user. The App execution unit 262 generates a VR image representing an execution result of the VR game on the basis of (1) the data regarding the play area stored in the play area storage unit 254, (2) the camera image obtained by the system unit 260, (3) the position and posture of the head-mounted display 100 obtained by the system unit 260, and (4) the visual line direction of the user measured by the system unit 260.

The VR image includes a left eye image and a right eye image.

The display control unit 264 transmits data regarding various VR images generated by the App execution unit 262 to the head-mounted display 100 and causes the display unit 124 of the head-mounted display 100 to display the VR images. The display unit 124 of the head-mounted display 100 displays the left eye image generated by the App execution unit 262 on the left eye display panel and displays the right eye image generated by the App execution unit 262 on the right eye display panel.

The system unit 260 executes processing for a system relating to the head-mounted display 100. The system unit 260 provides a common service to a plurality of applications (for example, a plurality of VR games) that are for the head-mounted display 100. The common service includes provision of data regarding the play area, provision of the camera image, provision of information regarding the position and posture of the head-mounted display 100, and provision of visual line measurement results, for example.

In addition, the system unit 260 executes processing relating to the setting of the play area. The processing relating to the setting of the play area includes processing for assisting adjustment of the floor height in the virtual space. The floor height in the virtual space can also be said to be the floor height in the play area, the floor height recognized by the App execution unit 262, or the floor height set in the VR game.

The system unit 260 includes a camera image obtainment unit 270, a position/posture obtainment unit 272, a visual line measurement unit 274, a play area setting unit 276, an adjustment screen generation unit 278, and a floor setting unit 280.

The camera image obtainment unit 270 obtains the data regarding the camera image transmitted from the head-mounted display 100, the camera image being captured by the stereo camera 110 of the head-mounted display 100.

The position/posture obtainment unit 272 obtains the position and posture of the head-mounted display 100. The position/posture obtainment unit 272 detects at a predetermined rate the position and posture of the head-mounted display 100 worn on the head of the user, on the basis of a detection value obtained by the motion sensor 134 of the head-mounted display 100. The position and posture of the head-mounted display 100 can also be said to be the position and posture of the head of the user wearing the head-mounted display 100.

The position of the head-mounted display 100 may be represented by coordinates indicative of a position where the head-mounted display 100 exists in the 3D space in the real world. The posture of the head-mounted display 100 may be represented by an inclination of the head-mounted display 100 in three axes including a longitudinal direction, a transverse direction, and a height direction. The position/posture obtainment unit 272 may obtain the position and posture of the head-mounted display 100 on the basis of the camera image transmitted from the head-mounted display 100. Moreover, the position/posture obtainment unit 272 may obtain the position and posture of the head-mounted display 100 on the basis of both the detection value obtained by the motion sensor 134 of the head-mounted display 100 and the camera image.

The visual line measurement unit 274 uses a publicly known eye tracking technology to detect the position and motion of the pupil as well as the visual line direction of the user wearing the head-mounted display 100 on the basis of a detection value obtained by the eye tracking sensor 136 of the head-mounted display 100.

The play area setting unit 276 executes various kinds of processing relating to the setting of the play area. The play area setting unit 276 sets the play area on the basis of the camera image obtained by the camera image obtainment unit 270 and the operation input by the user via the controller 140. The play area setting unit 276 has a function as a play area detection unit, and specifically, automatically detects the play area from the space surrounding the user wearing the head-mounted display 100 on the basis of the camera image obtained by the camera image obtainment unit 270. The play area setting unit 276 stores in the play area storage unit 254 data regarding the play area thus detected and set.

The adjustment screen generation unit 278 generates data regarding the adjustment screen that allows the user wearing the head-mounted display 100 to adjust the floor height in the virtual space displayed on the head-mounted display 100. The display control unit 264 transmits the data regarding the adjustment screen generated by the adjustment screen generation unit 278 to the head-mounted display 100 and causes the display unit 124 of the head-mounted display 100 to display the adjustment screen.

The floor setting unit 280 sets the floor height in the virtual space according to the operation to the adjustment screen that is input to the button 142 or the analog stick 144 of the controller 140, and stores the data indicative of the floor height in the virtual space in the play area storage unit 254. In the embodiment, when the operation of setting the height of the user is input to the image of the stadiometer in the adjustment screen, the floor setting unit 280 sets the floor height in the virtual space according to the height of the user.

An operation by the image generation device 200 configured as described above will be described. FIG. 7 is a flowchart illustrating an operation of the image generation device 200. FIG. 7 illustrates an operation executed when the user wearing the head-mounted display 100 has used the controller 140 to select a menu item for setting the play area from among a plurality of setting menu items for the head-mounted display 100 that are provided by the image generation device 200.

Although not illustrated in FIG. 7, the camera image obtainment unit 270 of the image generation device 200 successively obtains a plurality of images (camera images) that are captured by the stereo camera 110 of the head-mounted display 100 and transmitted from the head-mounted display 100. Further, the position/posture obtainment unit 272 of the image generation device 200 repeatedly obtains the position and posture of the head-mounted display 100 on the basis of the captured images obtained by the stereo camera 110 of the head-mounted display 100 and/or measurement values obtained by the motion sensor 134. The visual line measurement unit 274 of the image generation device 200 detects the position and motion of the eyeball as well as the visual line direction of the user wearing the head-mounted display 100 on the basis of measurement values obtained by the eye tracking sensor 136 of the head-mounted display 100.

The play area setting unit 276 of the image generation device 200 automatically detects a play area in the space surrounding the user wearing the head-mounted display 100 on the basis of the camera image and the motion sensor data obtained from the head-mounted display 100 (S10). For example, the play area setting unit 276 may estimate a 3D shape of the room where the user is present with use of a publicly known method on the basis of the camera image and the motion sensor data corresponding to the camera image, to thereby estimate this 3D shape as the shape of the play area. The play area setting unit 276 stores in the play area storage unit 254 play area data including coordinate values of a point group constituting a boundary of the play area.

Moreover, in S10, the play area setting unit 276 detects planes that lie perpendicularly to the vertical direction indicated by the motion sensor data, on the basis of the estimated shape of the play area, and estimates a result of combining a plurality of detected planes having the same height as the shape of the floor of the play area (that is, the floor in the virtual space). The play area setting unit 276 estimates the height of the detected floor (in other words, the distance from the head-mounted display 100 to the floor) with use of a publicly known method such as triangulation. The play area setting unit 276 further stores the estimated shape and height of the floor in the play area storage unit 254.

In a case where the user has selected to use a stadiometer UI in the adjustment of the floor height (Y in S11), the adjustment screen generation unit 278 of the image generation device 200 generates data regarding an adjustment screen including a stadiometer image (S12). The display control unit 264 of the image generation device 200 causes the head-mounted display 100 to display the adjustment screen including the stadiometer image (S13).

FIG. 8 illustrates an example of the adjustment screen. An adjustment screen 300 displays an AR image obtained by the video see-through method. Specifically, a video depicting a situation of a space in the real world (in this example, the room where the user is present) captured by the stereo camera 110 of the head-mounted display 100 is displayed in the adjustment screen 300. Controllers 140 grasped by the user appear in the adjustment screen 300 illustrated in FIG. 8.

In addition, the adjustment screen 300 includes a stadiometer image 302 and a user image 304. The stadiometer image 302 includes graduations of the stadiometer. The graduations of the stadiometer may be set such that the value of the graduations increases upward in the vertical direction from the floor, with the floor height that has been detected by the play area setting unit 276 and stored in the play area storage unit 254 set as 0. The user image 304 is an image representing the user wearing the head-mounted display 100. Hereinafter, the adjustment screen including the stadiometer image 302 and the user image 304 is also referred to as a first adjustment screen 300a.

In the first adjustment screen 300a illustrated in FIG. 8, the user inputs an operation for setting the height of the user to the stadiometer image 302. The operation for setting the height of the user to the stadiometer image 302 is an operation that is input with use of the button 142 or the analog stick 144 of the controller 140 and that designates a position (or a value) that matches the height of the user in the graduations of the stadiometer image 302. Specifically, the user inputs an operation in an up-down direction to the button 142 or the analog stick 144 of the controller 140, thereby moving the user image 304 till the top of the head of the user image 304 agrees with the position that matches the height of the user in the graduations of the stadiometer image 302, and then inputs a setting completion operation.

In the embodiment, the floor height stored in the play area storage unit 254 is the distance in the vertical direction from the preset reference part (for example, the center of the front surface of the housing 108) of the head-mounted display 100 to the detected floor. In addition, a distance from the reference part of the head-mounted display 100 to the top of the head of the user image 304 (hereinafter, also referred to as the "head top distance") is a fixed value determined in advance and is, for example, 10 centimeters.

With reference back to FIG. 7, when the user image 304 has been moved to match the relevant position in the graduations of the stadiometer image 302 and the setting completion operation has been input in the first adjustment screen 300a (Y in S14), the floor setting unit 280 of the image generation device 200 stores in the play area storage unit 254 the floor height set in the first adjustment screen 300a (S18).

In this case, the floor setting unit 280 may set the floor height on the basis of the remaining height (for example, 160 centimeters) obtained by subtracting the head top distance (for example, 10 centimeters) from the height (for example, 170 centimeters) indicated by the relevant position in the graduations of the stadiometer image 302, the relevant position to which the top of the head of the user image 304 has been adjusted to match. For example, the floor setting unit 280 may set the distance in the vertical direction from the reference part of the head-mounted display 100 to the floor to 160 centimeters, and may alternatively set the floor height to -160 centimeters from the reference part of the head-mounted display 100.

When the setting completion operation has not been input in the first adjustment screen 300a and the visual line measurement unit 274 has detected that the visual line of the user is directed downward (for example, in the vertically downward direction) (N in S14), the floor setting unit 280 generates data regarding an adjustment screen 300 (hereinafter, also referred to as a "second adjustment screen 300b") represented by overlapping an image of the floor in the real space with the floor in the virtual space. The display control unit 264 causes the head-mounted display 100 to display the second adjustment screen 300b. When the visual line direction of the user has changed from a horizontal direction (a direction perpendicular to the vertical direction) to the downward direction, the floor setting unit 280 and the display control unit 264 switch the display target from the first adjustment screen 300a to the second adjustment screen 300b.

FIG. 9 also illustrates an example of the adjustment screen 300. FIG. 9 illustrates an example of the second adjustment screen 300b. The second adjustment screen 300b includes a real floor image 306 and a virtual floor image 308. The real floor image 306 is an image obtained by capturing the floor in the real space by the stereo camera 110 of the head-mounted display 100. The virtual floor image 308 is an image representing the floor in the virtual space, the floor having been detected by the play area setting unit 276. The adjustment screen generation unit 278 disposes the virtual floor image 308 at the position based on the floor height (in other words, the distance in the vertical direction from the reference part of the head-mounted display 100 to the floor) stored in the play area storage unit 254. It is to be noted that, in order to allow the user to visually recognize both the real floor image 306 and the virtual floor image 308 whichever of them is disposed on the upper side, a predetermined transmittance higher than 0 may preferably be set to each of the real floor image 306 and the virtual floor image 308, so that they may be displayed translucent.

The operation made by the user in the second adjustment screen 300b is an operation that is input to the button 142 or the analog stick 144 of the controller 140 and that causes the floor height in the real space and the floor height in the virtual space to match each other. Specifically, the user inputs an operation in the up-down direction to the button 142 or the analog stick 144 of the controller 140, thereby moving the virtual floor image 308 to adjust the position thereof in the up-down direction till the real floor image 306 and the virtual floor image 308 precisely overlap each other, and then inputs a setting completion operation.

With reference back to FIG. 7, when the setting completion operation has been input in the second adjustment screen 300b (Y in S15), the floor setting unit 280 stores in the play area storage unit 254 the floor height set in the second adjustment screen 300b (S18).

In S18, the floor setting unit 280 may derive a difference between the floor height based on the position of the virtual floor image 308 obtained when the setting completion operation has been input on one hand and the estimation value (that is, the value before the adjustment) of the floor height stored in the play area storage unit 254 on the other hand, and may update the floor height stored in the user image 304 in such a manner as to reflect the difference. For example, in a case where the estimation value of the floor height is - 150 centimeters from the reference part of the head-mounted display 100 and where the virtual floor image 308 has been lowered by 10 centimeters in the second adjustment screen 300b, the floor setting unit 280 may update the floor height to -160 centimeters from the reference part of the head-mounted display 100.

If the setting completion operation is not input in the second adjustment screen 300b (N in S15), S18 is skipped, and the processing in the present figure is completed. It is to be noted that, back in S14, the display control unit 264 may continue displaying the first adjustment screen 300a or the second adjustment screen 300b, depending on the visual line direction of the user.

The image generation device 200 further provides, as the method for adjusting the floor height in the virtual space, a method different from the method using the adjustment screen 300 (the first adjustment screen 300a and the second adjustment screen 300b). This different method is a conventional method for setting the floor height in the virtual space, that is, a method in which the controller 140 is caused to touch the floor in the real space. The user can select the method of causing the controller 140 to touch the floor for the adjustment of the floor height, in place of the method using the stadiometer UI. This enables the user to selectively use the method that is easier for the user among a variety of methods and set the floor height in the virtual space. For example, if the user is accustomed to using the conventional method of setting the floor height in the virtual space, the user can select the method of causing the controller 140 to touch the floor instead of the method using the stadiometer UI.

In the case where the user has selected the method of causing the controller 140 to touch the floor for the adjustment of the floor height (N in S11), the display control unit 264 causes the head-mounted display 100 to display information that instructs the user to place the controller 140 on the floor (S16). At this time, the display control unit 264 may cause the head-mounted display 100 to display an AR image that includes the information for the instruction described above and that is obtained by the video see-through method.

When it is detected that the controller 140 has been moved to a position at a predetermined height (for example, on the floor in the real space) (Y in S17), the floor setting unit 280 estimates the floor height in the virtual space in reference to the height position of the controller 140 and stores data indicative of the estimated floor height in the play area storage unit 254 (S18). A publicly known technology may be used to perform the detection of the movement of the controller 140 to the position at the predetermined height (for example, on the floor in the real space) and to perform the estimation of the floor height in response to this detection. In this case, the position at the predetermined height signifies the lowest position to which the controller 140 has moved during the adjustment of the floor height in the virtual space. If the movement of the controller 140 to the position at the predetermined height (for example, on the floor in the real space) has yet to be detected (N in S17), the process in S18 is skipped, and the processing flow in the present figure is completed. It is to be noted that the detection of the movement of the controller 140 to the position at the predetermined height (for example, on the floor in the real space) may be waited for, and for example, the display of the information that instructs the user to place the controller 140 on the floor may be continued during the wait.

After the adjustment of the floor height in the virtual space has been completed and a user operation for instructing a start of the VR game has been input, the App execution unit 262 of the image generation device 200 executes the VR game with use of the data regarding the play area stored in the play area storage unit 254. The App execution unit 262 generates a VR image in which various characters, structures, items, and the like are disposed on the floor in the virtual space, on the basis of the floor height in the virtual space stored in the play area storage unit 254.

According to the image generation device 200 of the embodiment, the floor height in the virtual space is set according to the operation for setting the height of the user to the stadiometer image 302 in the adjustment screen 300 (specifically, the operation for designating the position that matches the height of the user in the graduations of the stadiometer image 302). Accordingly, the UI that is easy to appropriately set the floor height in the virtual space by an intuitive operation can be provided. Moreover, according to the image generation device 200, by changing a mode of the adjustment screen according to the visual line direction of the user, the UI that is easy to appropriately set the floor height in the virtual space by an intuitive operation and that is suited to the visual line direction of the user can be provided.

The present invention has been explained on the basis of the embodiment. It is to be understood by those skilled in the art that this embodiment is illustrative, various modified examples can be made for combinations of the constituent elements or the processing steps, and such modified examples are also within the scope of the present invention.

A modified example will be described. At least some functions among the plurality of functions implemented by the image generation device 200 in the above-described embodiment may be implemented by the head-mounted display 100, or may be implemented by the server that is connected to the image generation device 200 via the network. For example, the head-mounted display 100 may have a function of generating data regarding various screens or images on the basis of camera images or sensor measurement values. Alternatively, the server may have a function of generating data regarding various screens or images on the basis of camera images or sensor measurement values, and the head-mounted display 100 may display screens or images generated by the server.

Any combination of the embodiment and the modified example described above is also valid as an embodiment of the present disclosure. A new embodiment that arises from this combining has respective effects of the combined embodiment and modified example. In addition, it is also to be understood by those skilled in the art that functions to be fulfilled by respective constituent elements described in the claims are realized solely by the respective constituent elements described in the embodiment and the modified example or through cooperation of them.

### [Industrial Applicability]

The technology of the present disclosure can be applied to an information processing device or a system.

### [Reference Signs List]

- 100:: Head-mounted display
- 140:: Controller
- 142:: Button
- 144:: Analog stick
- 200:: Image generation device
- 264:: Display control unit
- 278:: Adjustment screen generation unit
- 280:: Floor setting unit

## Claims

1. An information processing device comprising:
an adjustment screen generation unit that generates an adjustment screen for allowing a user wearing a head-mounted display to adjust a floor height in a virtual space displayed on the head-mounted display, the adjustment screen including an image of a stadiometer;
a display control unit that causes the head-mounted display to display the adjustment screen; and
a floor setting unit that, when an operation for setting a height of the user to the image of the stadiometer in the adjustment screen has been input, sets the floor height in the virtual space according to the height of the user set to the image of the stadiometer.

2. The information processing device according to claim 1, wherein the operation for setting the height of the user to the image of the stadiometer is an operation that is input to a button or a stick of a controller and that designates a position that matches the height of the user in graduations of the stadiometer.

3. The information processing device according to claim 1 or 2, wherein, when a visual line of the user is directed downward, the adjustment screen generation unit generates an adjustment screen represented by overlapping an image of a floor in a real space with an image of the floor in the virtual space, and
the floor setting unit sets the floor height in the virtual space according to an operation that is input to a button or a stick of a controller and that causes a floor height in the real space and the floor height in the virtual space to match each other.

4. The information processing device according to claim 1 or 2, wherein the user is allowed to select, as a method for adjusting the floor height in the virtual space, a method different from a method using the adjustment screen.

5. A floor height adjustment method executed by a computer, comprising:
a step of generating an adjustment screen for allowing a user wearing a head-mounted display to adjust a floor height in a virtual space displayed on the head-mounted display, the adjustment screen including an image of a stadiometer;
a step of causing the head-mounted display to display the adjustment screen; and
a step of, when an operation for setting a height of the user to the image of the stadiometer in the adjustment screen has been input, setting the floor height in the virtual space according to the height of the user set to the image of the stadiometer.

6. A computer program for causing a computer to implement:
a function of generating an adjustment screen for allowing a user wearing a head-mounted display to adjust a floor height in a virtual space displayed on the head-mounted display, the adjustment screen including an image of a stadiometer;
a function of causing the head-mounted display to display the adjustment screen; and
a function of, when an operation for setting a height of the user to the image of the stadiometer in the adjustment screen has been input, setting the floor height in the virtual space according to the height of the user set to the image of the stadiometer.
